# FASCICULE DE BREVET EUROPEEN

(11) **EP 2 993 436 B1**
(45) Date de publication et mention de la délivrance du brevet: **31.07.2019**
(21) Numéro de dépôt: 15184354.7
(22) Date de dépôt: 08.09.2015
(51) Int. Cl.: F28D 1/03, B60H 1/00, F28D 20/02, F28F 3/02

(54) **DISPOSITIF DE GESTION THERMIQUE À MATÉRIAU À CHANGEMENT DE PHASE POUR VÉHICULE AUTOMOBILE**
VORRICHTUNG FÜR KRAFTFAHRZEUG ZUR THERMISCHEN STEUERUNG MITHILFE VON PHASENWECHSELMATERIAL
THERMAL MANAGEMENT DEVICE WITH PHASE-SHIFT MATERIAL FOR MOTOR VEHICLE

(30) Priorité: 08.09.2014 FR 1458385
(43) Date de publication de la demande: 09.03.2016
(73) Titulaire: VALEO SYSTEMES THERMIQUES, 78320 Le Mesnil Saint-Denis (FR)
(72) Inventeur: ROBILLON, Lionel, 72230 MULSANNE (FR); TISON, Frédéric, 72230 GUECELARD (FR); AZZOUZ, Kamel, 75012 PARIS (FR)
(74) Mandataire: Metz, Gaëlle

(56) Documents cités:
- EP-A1- 2 653 329
- EP-A1- 2 875 976
- DE-A1-102004 035 818
- JP-A- 2011 133 182

## Description

L'invention concerne un dispositif de gestion thermique pour véhicule automobile et plus particulièrement un dispositif de gestion thermique comportant un matériau à changement de phase associé à un échangeur thermique selon le préambule de la revendication 1. JP 2011 133182 divulgue un tel dispositif.

Un échangeur thermique a pour fonction d'assurer un échange thermique entre un premier fluide caloporteur en circulation à l'intérieur d'une pluralité de canaux, et un second fluide caloporteur extérieur, traversant l'échangeur thermique au sein d'un circuit de gestion thermique. Par exemple, dans le cas d'une boucle de climatisation, cette dernière comprend généralement au moins un échangeur thermique agencé en face avant aussi appelé échangeur thermique externe et un échangeur thermique agencé pour conditionner le flux d'air à destination de l'habitacle aussi nommé échangeur thermique interne.

L'échangeur thermique externe permet un transfert thermique entre le premier fluide caloporteur qui est généralement un fluide réfrigérant et le second fluide caloporteur qui est l'air ambiant, tel qu'un flux d'air extérieur au véhicule.

L'échangeur thermique interne permet un échange thermique entre le fluide réfrigérant et le flux d'air destiné à être délivré à l'intérieur de l'habitacle qui traverse l'échangeur thermique interne. Il s'agit généralement d'un évaporateur interne permettant de refroidir le flux d'air le traversant préalablement à sa distribution à l'intérieur de l'habitacle à travers une bouche de distribution d'air.

Dans une boucle de climatisation permettant un refroidissement de l'air à destination de l'habitacle, l'échangeur thermique externe joue un rôle de condenseur et l'échangeur thermique interne joue un rôle d'évaporateur. Dans cette configuration, l'énergie calorifique prélevée par l'échangeur thermique interne au flux d'air à destination de l'habitacle est libérée par condensation du fluide réfrigérant au niveau de l'échangeur thermique externe.

Toutefois, lorsque le moteur du véhicule est arrêté, la circulation du fluide réfrigérant n'a plus lieu, et l'échange thermique entre le flux d'air et le fluide réfrigérant ne peut s'opérer. L'air soufflé dans l'habitacle du véhicule n'est alors plus rafraîchi.

Cette situation est d'autant plus problématique que des systèmes d'économie de carburant récents prévoient l'arrêt automatique du moteur lorsque la voiture s'immobilise, privant fréquemment l'habitacle d'air rafraîchi. Il s'agit notamment de véhicules automobiles équipés d'un alterno-démarreur pour la mise en oeuvre d'un dispositif d'arrêt et de redémarrage automatique du moteur, par exemple l'arrêt du moteur à un feu tricolore ou à un stop, entraîne l'arrêt du fonctionnement du compresseur de la boucle de climatisation et donc un arrêt du fonctionnement de cette dernière.

Afin de remédier à l'arrêt du rafraîchissement de l'air soufflé dans l'habitacle lorsque le moteur est stoppé, il est connu d'utiliser dispositif de gestion thermique comportant un matériau à changement de phase associé à un échangeur thermique. Il est ainsi connu de placer un matériau à changement de phase composite, dans le flux du second fluide caloporteur en aval de l'échangeur thermique.

Lorsque la boucle de climatisation fonctionne, le matériau à changement de phase cède de l'énergie calorifique au fluide réfrigérant en passant en phase solide. Lorsque la boucle de climatisation est à l'arrêt, le flux d'air à destination de l'habitacle circulant au contact du matériau à changement de phase est refroidi par ce dernier qui lui prélève de l'énergie calorifique en passant en phase liquide.

Ainsi, lorsque le moteur du véhicule est en marche, le fluide réfrigérant refroidit à la fois l'air traversant l'échangeur thermique et le moyen de stockage thermique. Le moyen de stockage thermique capte quant à lui l'énergie calorifique de l'air traversant l'échangeur thermique afin de le refroidir lorsque le moteur est coupé.

Néanmoins, dans le cas d'une boule de climatisation, le second fluide caloporteur est de l'air et le matériau à changement de phase compris dans le matériau à changement de phase composite peut subir une certaine évaporation ce qui avec le temps diminue l'efficacité du moyen de stockage thermique.

Un des buts de la présente invention est de remédier au moins partiellement aux inconvénients de l'art antérieur et de proposer un échangeur thermique avec un moyen de stockage thermique amélioré.

La présente invention concerne donc Dispositif de gestion thermique comportant :
- un échangeur thermique au sein duquel circule un premier fluide caloporteur et destiné à être traversé par un second fluide caloporteur,
- au moins un moyen de stockage thermique comprenant un empilement entre:
   - une pluralité de matériaux à changement de phase composite, et
   - des intercalaires interposés entre les matériaux à changement de phase composites et en contact thermique avec lesdits matériaux à changement de phase composite,
   ledit empilement étant disposé perpendiculairement au flux du second fluide caloporteur en aval de l'échangeur thermique selon le sens d'écoulement dudit flux du second fluide caloporteur,
   ledit moyen de stockage thermique comportant au moins un rebord venant recouvrir au moins une tranche des matériaux à changement de phase composite, ladite tranche étant disposée en vis-à-vis dudit échangeur thermique.

Ce rebord a comme fonction la protection du matériau à changement de phase contenu dans le matériau à changement de phase composite. Ce dernier a ainsi moins de risques de s'évaporer au contact du second fluide caloporteur.

Selon un aspect de l'invention, le rebord vient de matière avec au moins une des intercalaires du moyen de stockage thermique.

Le fait que le rebord vienne de matière avec au moins une des intercalaires permet de le réaliser en même temps que ladite intercalaire et ainsi d'effectuer des économies de production.

Selon un autre aspect de l'invention, le rebord recouvrant une tranche de matériau à changement de phase composite vient de matière avec un même intercalaire.

Selon un autre aspect de l'invention, une tranche de matériau à changement de phase composite est recouverte par deux rebords crénelés et complémentaires agencés selon un emboitement mutuel, lesdits rebords venant de matières avec des intercalaires distinctes situées de part et d'autre du matériau à changement de phase composite.

Selon un autre aspect de l'invention, les intercalaires sont réalisée en matière métallique et que leur mise en forme est réalisées par emboutissage.

Selon un autre aspect de l'invention, chaque intercalaire comprend des rangées des créneaux répartis parallèlement au rebord, les rangées étant alternativement décalées l'une par rapport à l'autre.

Selon un autre aspect de l'invention, le moyen de stockage thermique comporte des intercalaires disposés par paire en vis-à-vis l'un de l'autre de sorte que les créneaux de l'un des intercalaires s'étendent au droit des créneaux de l'autre des intercalaires.

Selon un autre aspect de l'invention, le moyen de stockage thermique comporte des intercalaires décalés par paire l'un de l'autre de sorte que les créneaux de l'un des intercalaires s'étendent au droit de surfaces planes de l'autre des intercalaires.

Selon un autre aspect de l'invention, chaque créneau s'étend en saillie hors d'une base de l'intercalaire reliée au rebord.

Selon un autre aspect de l'invention, l'empilement comporte en outre un rebord recouvrant la tranche des matériaux à changement de phase composite opposée à celle en vis-à-vis de l'échangeur thermique.

La présente invention concerne également une boucle de climatisation comportant un dispositif de gestion thermique comme décrit précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une boucle de climatisation,
- la figure 2 montre une représentation schématique en perspective d'un échangeur thermique,
- la figure 3 montre une représentation schématique en vue de face d'un dispositif de gestion,
- la figure 4 montre une représentation schématique en vue de côté du dispositif de gestion de la figure 1,
- la figure 5 montre une représentation schématique en perspective d'intercalaires,
- la figure 6 montre une représentation schématique en perspective d'une portion d'un moyen de stockage thermique selon un premier mode de réalisation,
- la figure 7 montre une représentation schématique en perspective d'une portion d'un moyen de stockage thermique selon un second mode de réalisation,

Sur ces figures, les éléments sensiblement identiques portent les mêmes références.

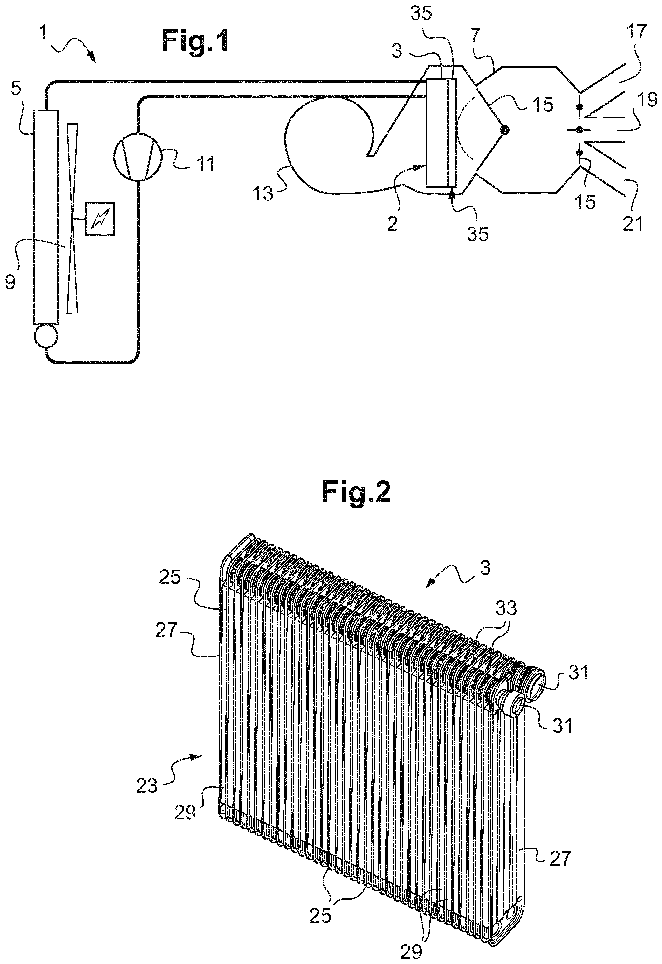

L'invention concerne un dispositif de gestion thermique 2 comportant un échangeur thermique 3 dans lequel circule un premier fluide caloporteur, et traversé par un second fluide caloporteur ainsi qu'au moins un moyen de stockage thermique 35. Un tel dispositif de gestion thermique 2, est apte à être utilisé notamment dans une boucle de climatisation pour véhicule automobile comme illustré à la figure 1. Le premier fluide caloporteur peut alors être un fluide réfrigérant et le second fluide caloporteur un flux d'air par exemple destiné à l'habitacle dans le cas ou l'échangeur thermique 3 est un évaporateur.

La boucle de climatisation 1 comporte un dispositif de gestion thermique 2 destiné à conditionner un flux d'air à destination de l'habitacle du véhicule automobile, par échange thermique avec le fluide réfrigérant. Le dispositif de gestion thermique 2 est par exemple placé à l'intérieur d'un boîtier de climatisation 7. Le boîtier de climatisation 7 est situé généralement dans l'habitacle du véhicule.

La boucle de climatisation 1 comporte en outre un échangeur thermique dit externe 5 destiné à être placé au contact de l'air extérieur du véhicule, par exemple au niveau de la face avant du véhicule automobile. L'échangeur thermique externe 5 peut être notamment couplé avec un ventilateur 9 qui permet le passage de l'air extérieur au travers de l'échangeur thermique externe 5, par exemple en cas de faible vitesse ou d'arrêt du véhicule automobile.

Le fluide réfrigérant est mis en circulation par un compresseur 11 dont la fonction est d'augmenter la pression et la température du fluide réfrigérant. Le compresseur 11 est selon l'exemple illustré sur la figure 1 placé amont de l'échangeur thermique externe 5 et en aval du dispositif de gestion thermique 2 selon le sens de circulation du fluide réfrigérant.

Bien entendu, on peut prévoir au moins un organe de détente (non représenté) permettant d'abaisser la pression du fluide réfrigérant avant évaporation.

La boucle de climatisation 1 peut comprendre en outre un groupe moto-ventilateur 13 (schématisé sur la figure 1) permettant de propulser le flux d'air à destination de l'habitacle à travers le boîtier de climatisation 7. Le flux d'air à destination de l'habitacle peut notamment être régulé par un ou plusieurs organes de mixage, tel que des volets de mixage 15.

Le flux d'air à destination de l'habitacle est distribué à des zones de l'habitacle via des conduits de distributions d'air 17, 19 et 21, reliées par exemple à des sorties d'air sous pare-brise, des sorties en façade du tableau de bord, ou encore des sorties d'air sous le tableau de bord en direction des pieds.

La figure 2 est une vue schématique de l'échangeur thermique 3 du dispositif de gestion thermique 2 destiné à conditionner le flux d'air à destination de l'habitacle selon l'invention. Cet échangeur thermique 3 peut être notamment utilisé en tant qu'évaporateur dans une boucle de climatisation 1 d'un véhicule automobile.

En fonctionnement, l'échangeur thermique 3 permet un échange thermique entre le fluide réfrigérant et le flux d'air traversant le dispositif de gestion thermique 2.

Lorsque la boucle de climatisation 1 fonctionne de façon à refroidir le flux d'air à destination de l'habitacle, le fluide réfrigérant s'évaporant au sein de l'échangeur thermique 3, travaillant en évaporateur, capte de l'énergie calorique du flux d'air à destination de l'habitacle, afin de permettre le passage du fluide réfrigérant d'une phase liquide à une phase gazeuse. Dans ce mode de climatisation, l'échangeur thermique externe 5 (visible sur la figure 1) est par exemple apte à travailler en condenseur, le fluide réfrigérant cédant alors de l'énergie calorifique au flux d'air extérieur afin de permettre le passage du fluide réfrigérant de la phase gazeuse à une phase liquide.

Selon l'exemple illustré sur la figure 2, l'échangeur thermique 3 présente une forme générale sensiblement parallélépipédique.

L'échangeur thermique 3 comprend un faisceau d'échange thermique 23.

Le faisceau d'échange thermique 23 comprend notamment un empilement successif de tubes d'échange thermique 25. Selon un exemple de réalisation, un tube d'échange thermique 25 peut comprendre une première plaque et une deuxième plaque assemblées. Un tube d'échange thermique 25 présente selon l'exemple de réalisation de la figure 2 une forme générale de parallélépipède rectangle. Les tubes d'échange thermique 25 comprennent respectivement au moins un canal de circulation du fluide réfrigérant. Un canal de circulation du fluide réfrigérant peut s'étendre sensiblement sur la totalité de la longueur d'un tube d'échange thermique 25 pour obtenir une surface d'échange importante.

En outre selon le mode de réalisation illustré, le faisceau d'échange thermique 23 présente à ses extrémités longitudinales deux plaques de fermeture 27, c'est-à-dire agencées de part et d'autre des tubes d'échange thermique 25.

L'échangeur thermique 3 peut comprendre en outre des ailettes de perturbation 29, disposées à chaque fois entre deux tubes d'échange thermique 25 adjacents, également entre un tube d'échange thermique 25 et une plaque de fermeture 27 adjacente.

Les ailettes de perturbation 29 ont pour fonction d'augmenter la surface d'échange thermique entre le fluide réfrigérant circulant dans les tubes d'échange thermique 25 et le flux gazeux, tel que le flux d'air extérieur qui traverse l'échangeur thermique 3.

De telles ailettes de perturbation 29 peuvent être formées à partir d'un feuillard métallique, par exemple en alliage d'aluminium.

Les tubes d'échange thermique 25 et les ailettes de perturbation 29 peuvent être brasées ensemble. Les ailettes de perturbation 29 peuvent présenter une forme générale sensiblement ondulée. Dans ce cas, les ailettes de perturbation 29 peuvent être fixées aux tubes d'échange thermique par leurs ondulations respectives, par exemple par brasage.

De plus, au moins l'une des plaques de fermeture 27 présente au moins un orifice qui débouche dans une tubulure 31 dite d'entrée ou de sortie pour l'alimentation ou le refoulement en fluide réfrigérant. Sur la figure 1, seule l'une des plaques de fermeture 27 comprend des tubulures 31 d'entrée et de sortie.

Les tubes d'échange thermique 25 sont reliés les uns aux autres en communication de fluide par l'intermédiaire de brides de jonction 33 ménagées sur les extrémités des plaques formant les tubes d'échange thermique 25. Les brides de jonction 33 peuvent être venues de matière, de préférence par emboutissage, de sorte qu'elles forment respectivement un anneau faisant saillie hors du plan de la plaque et délimitant une ouverture pour le passage du fluide réfrigérant.

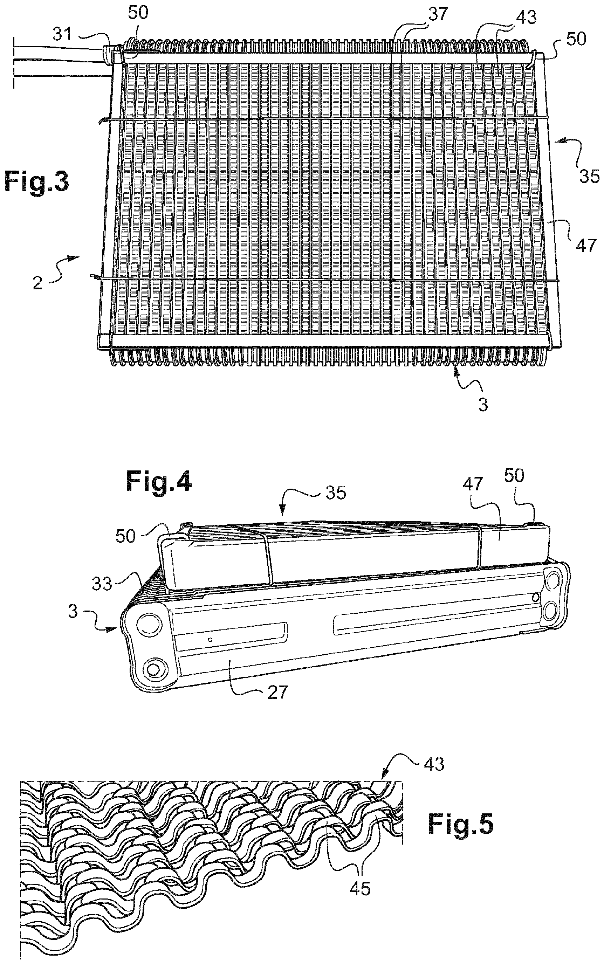

Le dispositif de gestion thermique 2 comporte en outre, au moins un moyen de stockage thermique 35 (schématisé sur la figure 1 et visible sur les figures 3 et 4). Le moyen de stockage thermique 35 est en particulier capable de capter de l'énergie calorifique par exemple afin de refroidir un flux d'air à destination de l'habitacle traversant le moyen de stockage thermique 35, notamment lors d'un arrêt de la boucle de climatisation, et donc d'un arrêt de l'échangeur thermique 3, ici un évaporateur 3.

À cet effet, le moyen de stockage thermique 35 est agencé de manière à être en contact direct avec le flux d'air à destination de l'habitacle. Ceci permet d'échanger efficacement de l'énergie avec le flux d'air pour améliorer le confort de l'utilisateur en cas d'arrêt de la boucle de climatisation.

Le moyen de stockage thermique 35 fait office d'un dispositif de refroidissement du flux d'air à destination de l'habitacle, annexe à l'échangeur thermique 3 destiné à conditionner le flux d'air à destination de l'habitacle travaillant en évaporateur.

Le moyen de stockage thermique 35 est agencé en aval de l'échangeur thermique 3 destiné à conditionner le flux d'air à destination de l'habitacle, selon le sens d'écoulement du flux d'air à destination de l'habitacle. En particulier, le moyen de stockage thermique 35 peut être fixé à l'échangeur thermique 3 destiné à conditionner le flux d'air à destination de l'habitacle.

En conséquence, le moyen de stockage thermique 35 peut également être agencé dans le boîtier de climatisation 7.

Ainsi, lorsque le moteur du véhicule est en marche, le fluide réfrigérant refroidit le flux d'air à destination de l'habitacle traversant l'échangeur thermique, le flux d'air à destination de l'habitacle refroidissant à son tour le moyen de stockage thermique 35. Lorsque le moteur est coupé, c'est le moyen de stockage thermique 35 qui refroidit le flux d'air à destination de l'habitacle le traversant.

Selon l'invention, le moyen de stockage thermique 35 comprend un matériau à changement de phase composite 37 assurant le stockage d'énergie calorifique et la restitution de celle-ci, lorsque la boucle de climatisation, et donc le compresseur 11 sont à l'arrêt.

Le matériau à changement de phase composite 37 comporte :
- au moins un premier matériau qui est un matériau à changement de phase, connu sous le sigle PCM pour l'anglais « Phase Change Material », et
- au moins un deuxième matériau, choisi(s) de manière à former une matrice de support du premier matériau à changement de phase.

Lorsque la boucle de climatisation fonctionne, le premier matériau à changement de phase cède de l'énergie calorifique au flux d'air à destination de l'habitacle en passant en phase solide. Lorsque la boucle de climatisation est à l'arrêt, le flux d'air à destination de l'habitacle circulant au contact du matériau à changement de phase est refroidi par ce dernier qui lui prélève de l'énergie calorifique en passant en phase liquide. On parle également de phases de congélation / décongélation du premier matériau à changement de phase.

Le premier matériau à changement de phase utilisé dans le matériau à changement de phase composite 37 est par exemple sélectionné pour avoir une température de changement de phase de l'ordre comprise entre 9 °C et 13 °C. Cette plage de température correspondant à la plage de température du flux d'air provenant de l'échangeur thermique 3 travaillant en évaporateur lorsque la boucle de climatisation fonctionne, permet une meilleure congélation du premier matériau à changement de phase et donc une augmentation du temps de confort thermique.

Un deuxième critère de sélection du premier matériau à changement de phase est la chaleur latente de changement de phase pour garantir une grande capacité de stockage d'énergie. Selon le mode de réalisation décrit, le premier matériau à changement de phase utilisé présente avantageusement une chaleur latente comprise entre 100 et 300 kJ/kg.

Le premier matériau à changement de phase utilisé dans le matériau à changement de phase composite 37 peut notamment être un matériau à changement de phase organique ou inorganique végétale ou d'autre origine. À titre d'exemple, le premier matériau à changement de phase peut comporter de la paraffine.

Le ou les deuxièmes matériaux sont choisis de façon à permettre au matériau à changement de phase composite 37 de conserver une structure de support solide quel que soit l'état solide ou liquide du premier matériau à changement de phase.

Le ou les deuxièmes matériaux sont par exemple également choisis pour assurer une étanchéité empêchant une fuite du premier matériau à changement de phase dans la phase liquide.

En deuxième matériau, on peut prévoir à titre d'exemple un polymère et/ou des fibres de carbone.

Ainsi, selon un exemple particulier, le matériau à changement de phase composite 37 peut être réalisé sous la forme d'une matrice de polymère et de fibres de carbone permettant au matériau à changement de phase composite 37 d'être suffisamment solide dans les phases solide ou liquide du premier matériau à changement de phase.

Afin d'améliorer les échanges thermiques, le moyen de stockage thermique 35 comporte en outre au moins un moyen de conduction thermique 43 agencé en contact thermique avec le matériau à changement de phase composite 37 et de manière à échanger des calories avec le flux d'air à destination de l'habitacle, comme schématisé sur la figure 5.

On entend par « contact thermique », le fait qu'une conduction thermique est possible entre le moyen de conduction thermique 43 et le matériau à changement de phase composite 37. Le moyen de conduction thermique 43 peut notamment refroidir le matériau à changement de phase composite 37.

Plus précisément, le moyen de conduction thermique 43 est agencé en contact direct avec le matériau à changement de phase composite 37.

Lorsque la boucle de climatisation fonctionne, le moyen de conduction thermique 43 est refroidi par convection par le flux d'air refroidi par passage dans l'échangeur thermique interne 3 travaillant en évaporateur. Le matériau à changement de phase composite 37 est refroidi par:
- convection par le flux d'air à destination de l'habitacle en sortie de l'échangeur thermique interne 3 travaillant en évaporateur, grâce au contact direct entre le flux d'air à destination de l'habitacle et le matériau à changement de phase composite 37, et également
- par conduction par le moyen de conduction thermique 43 refroidi par le flux d'air à destination de l'habitacle par convection, du fait que le moyen de conduction thermique 43 soit agencé en contact direct avec le matériau à changement de phase composite 37.

Le matériau à changement de phase composite 37 est donc refroidi à la fois par convection et conduction.

Lorsque la boucle de climatisation est à l'arrêt, le flux d'air à destination de l'habitacle traversant le moyen de stockage thermique 35 est refroidi par convection par le matériau à changement de phase composite 37 comme expliqué précédemment et en outre par le moyen de conduction thermique 43.

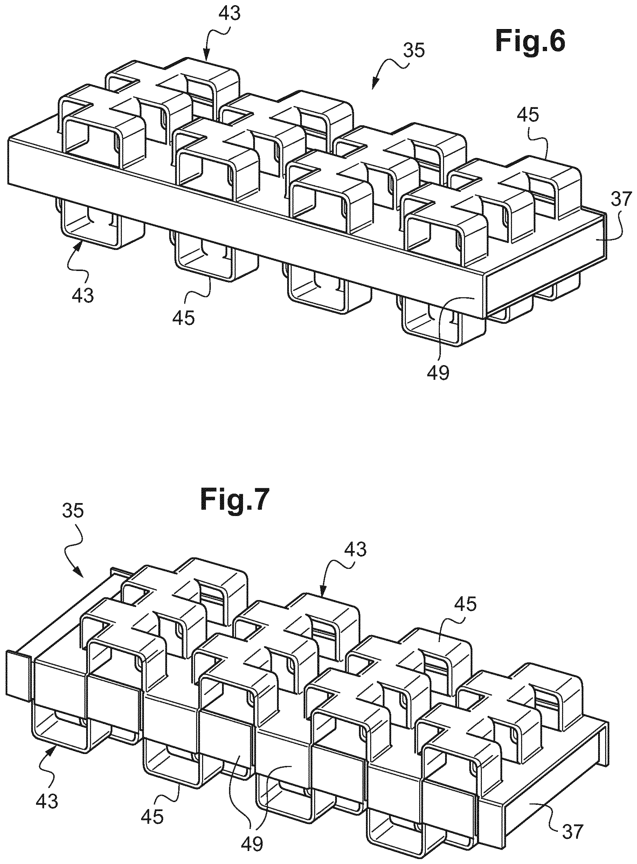

Selon un mode de réalisation illustré sur les figures 5 et 6, le moyen de stockage thermique 35 présente un empilement de matériaux à changement de phase composite 37 entre lesquels sont intercalés des moyens de conduction thermique 43 appelés intercalaires.

Ainsi, lorsque la boucle de climatisation fonctionne, les matériaux à changement de phase composite 37 sont refroidis par conduction thermique par les intercalaires 43 en contact avec les matériaux à changement de phase composite 37 et par le flux d'air à destination de l'habitacle sortant de l'échangeur thermique 3.

Lorsque la boucle de climatisation est à l'arrêt, le flux d'air à destination de l'habitacle est refroidi par convection grâce à la transition de phase du premier matériau à changement de phase utilisé dans les matériaux à changement de phase composites 37, comme expliqué précédemment, et grâce aux intercalaires 43 qui améliorent donc les échanges thermiques avec le flux d'air à destination de l'habitacle.

Les intercalaires 43 sont avantageusement réalisés en un matériau à fort pouvoir de conduction thermique, par exemple en matériau métallique comme l'aluminium.

En particulier, il peut s'agir d'intercalaires 43 agencés entre les matériaux à changement de phase composite 37, tel qu'illustré sur la figure 7.

Les intercalaires 43 peuvent être formés à partir d'un feuillard métallique, par exemple en alliage d'aluminium.

Avantageusement, les intercalaires 43 présentent respectivement une forme créant des perturbations de l'écoulement du flux d'air à destination de l'habitacle passant à travers eux. Ces perturbations permettent d'augmenter l'échange thermique avec le flux d'air à destination de l'habitacle. Un meilleur échange avec le flux d'air à destination de l'habitacle permet une meilleure efficacité des phases de congélation / décongélation du premier matériau à changement de phase.

Les intercalaires 43 peuvent présenter une forme générale sensiblement ondulée ou crénelée comme illustré à la figure 8. Les ondulations ou créneaux 45 des intercalaires 43 sont agencées directement en contact avec un matériau à changement de phase composite. Les ondulations ou créneaux 45 des intercalaires présentent par exemple une hauteur comprise entre 2mm et 5mm.

Les intercalaires 43 présentent des rangées d'ondulations ou créneaux 45. Les ondulations ou créneaux 45 d'une rangée à l'autre sont décalées afin de perturber le flux d'air et améliorer les échanges thermiques.

L'ensemble 37, 43 formé par le(s) matériau(x) à changement de phase composite(s) et une ou plusieurs intercalaires 43 peut être monté dans un support 47 permettant également une conduction thermique et fixé à l'échangeur thermique interne 3.

À titre d'exemple, le moyen de stockage 35 thermique peut comporter un cadre métallique 47, par exemple en aluminium ou en alliage d'aluminium, formant support de l'empilement de matériaux à changement de phase composites 37 et d'intercalaires 43.

Le cadre métallique 47 présente par exemple des accroches 50 mieux visibles sur les figures 7 et 9. Ces accroches 50 sont également en un matériau conducteur thermique, par exemple métalliques tel qu'en aluminium.

Ceci permet d'ajouter une conduction thermique entre la source froide formée par l'échangeur thermique 3 travaillant en évaporateur et le ou les matériaux à changement de phase composites 37 du moyen de stockage thermique 35.

Le cadre 47 forme un lien de conduction thermique entre l'échangeur thermique 3 travaillant en évaporateur et plus précisément les tubes d'échange thermique 25 dans lesquels circule le réfrigérant, et le moyen de stockage thermique 35, et plus précisément le(s) matériau(x) à changement de phase composite(s) 37. On obtient ainsi une conduction thermique des calories, ici des frigories des tubes d'échange thermique 25, vers le ou les matériaux à changement de phase composites 37 du moyen de stockage thermique 35, favorisant ainsi une congélation rapide et donc une meilleure efficacité de stockage du premier matériau à changement de phase utilisé dans le matériau à changement de phase composite 37.

Ainsi, lorsque la boucle de climatisation fonctionne, le ou les matériaux à changement de phase composites 37 sont en outre refroidis par conduction par l'intermédiaire du cadre 47 qui est en contact avec les tubes d'échanges thermiques 25 de l'échangeur interne 3 travaillant en mode évaporateur.

Comme montré sur les figures 6 et 7, le moyen de stockage thermique 35 comporte au moins un rebord 49 venant recouvrir au moins une tranche des matériaux à changement de phase composite 37. Ladite tranche étant disposée en vis-à-vis de l'échangeur thermique 3. Ce rebord 49 a comme fonction la protection du matériau à changement de phase contenu dans le matériau à changement de phase composite 37. Ce dernier a ainsi moins de risques de s'évaporer au contact du second fluide caloporteur.

Le rebord 49 peut de préférence venir de matière avec au moins une des intercalaires 43 situées du moyen de stockage thermique 35. Cela facilite alors le montage dudit rebord 49. Le rebord 49 peut, selon un premier mode de réalisation présenté à la figure 6, venir de matière avec un même intercalaire.

Selon un second mode de réalisation illustré à la figure 7, une tranche de matériau à changement de phase composite 37 peut être recouverte par deux rebords 49 crénelés et complémentaires agencés selon un emboitement mutuel. Lesdits rebords 49 viennent de matières avec des intercalaires 43 distincts situés de part et d'autre du matériau à changement de phase composite 37 au sein de l'empilement. Lesdits rebords 49 crénelés étant emboités les un dans les autres. Ce second mode de réalisation permet de ne produire qu'un seul type d'intercalaires complémentaires et ainsi permet de réaliser des économies de productions.

Les intercalaires 43 pouvant être en matière métallique, la formation des ondulations ou créneaux 45 ainsi que du rebord 49 peut être par exemple réalisée en une seule étape d'emboutissage.

Un rebord 49 supplémentaire peut également être disposé sur la tranche des matériaux à changement de phase composite 37 opposée à celle en vis-à-vis de l'échangeur thermique 3 de sorte à la recouvrir. Ce rebord 49 supplémentaire peut venir d'un intercalaire 43 comportant déjà un rebord 49 venant recouvrir la tranche des matériaux à changement de phase composite 37 en vis-à-vis de l'échangeur thermique 3.

A contrario, ce rebord 49 supplémentaire peut venir d'un intercalaire 43 ne comportant pas déjà un rebord 49 venant recouvrir la tranche des matériaux à changement de phase composite 37 en vis-à-vis de l'échangeur thermique 3. Cela permet ainsi également de ne produire qu'un seul type d'intercalaires et ainsi permet de réaliser des économies de productions.

Ainsi, chaque intercalaire 43 comprend des rangées des créneaux 45, alternativement décalées l'une par rapport à l'autre, et répartis parallèlement au rebord 49. Chaque créneau 45 s'étend en saillie hors d'une base de l'intercalaire 43 reliée au rebord 49. Ces intercalaires 43 sont disposés par paire en vis-à-vis l'un de l'autre de sorte que les créneaux de l'un des intercalaires 43 s'étendent au droit des créneaux de l'autre des intercalaires 43.

A contrario, il est également possible que le moyen de stockage thermique 35 comporte des intercalaires 43 décalés par paire l'un de l'autre de sorte que les créneaux de l'un des intercalaires 43 s'étendent au droit de surfaces planes de l'autre des intercalaires 43.

Ainsi, on voit bien que le dispositif de gestion thermique 2 selon l'invention permet d'éviter une évaporation du matériau à changement de phase et ainsi lui permet de conserver ces caractéristiques dans le temps.

## Revendications

1. Dispositif de gestion thermique (2) comportant :
- un échangeur thermique (3) au sein duquel circule un premier fluide caloporteur et destiné à être traversé par un second fluide caloporteur,
- au moins un moyen de stockage thermique (35) comprenant un empilement entre:
• une pluralité de matériaux à changement de phase composites (37), et
• des intercalaires (43) interposés entre les matériaux à changement de phase composites (37) et en contact thermique avec lesdits matériaux à changement de phase composite (37),
ledit empilement étant disposé perpendiculairement au sens d'écoulement du flux du second fluide caloporteur, en aval de l'échangeur thermique,
**caractérisé en ce que** ledit moyen de stockage thermique (35) comporte au moins un rebord (49) venant recouvrir au moins une tranche d'au moins un des matériaux à changement de phase composites (37), une telle tranche étant disposée en vis-à-vis dudit échangeur thermique (3).

2. Dispositif de gestion thermique (2) selon la revendication précédente, **caractérisé en ce que** le rebord (49) vient de matière avec au moins un des intercalaires (43) dudit moyen de stockage thermique (35).

3. Dispositif de gestion thermique (2) selon la revendication 2, **caractérisé en ce que** le rebord (49) recouvrant la tranche de matériau à changement de phase composite (37) vient de matière avec un même intercalaire (43).

4. Dispositif de gestion thermique (2) selon la revendication 2, **caractérisé en ce que** la tranche de matériau à changement de phase composite (37) est recouverte par deux rebords (49) crénelés et complémentaires agencés selon un emboîtement mutuel, lesdits rebords (49) venant de matière avec des intercalaires (43) distincts situés de part et d'autre du matériau à changement de phase composite (37).

5. Dispositif de gestion thermique (2) selon l'une des revendications 2 à 4, **caractérisé en ce que** les intercalaires (43) sont réalisés en matière métallique et que leur mise en forme est réalisée par emboutissage.

6. Dispositif de gestion thermique (2) selon l'une des revendications 2 à 5, **caractérisé en ce que** chaque intercalaire (43) comprend des rangées des créneaux (45) répartis parallèlement au rebord (49), les rangées étant alternativement décalées l'une par rapport à l'autre.

7. Dispositif de gestion thermique (2) selon la revendication précédente, **caractérisé en ce que** le moyen de stockage thermique (35) comporte des intercalaires (43) disposés par paire en vis-à-vis l'un de l'autre de sorte que les créneaux de l'un des intercalaires (43) s'étendent au droit des créneaux de l'autre des intercalaires (43).

8. Dispositif de gestion thermique (2) selon la revendication 6, **caractérisé en ce que** le moyen de stockage thermique (35) comporte des intercalaires (43) décalés par paire l'un de l'autre de sorte que les créneaux de l'un des intercalaires (43) s'étendent au droit de surfaces planes de l'autre des intercalaires (43).

9. Dispositif de gestion thermique (2) selon l'une quelconque des revendications 6 à 8, **caractérisé en ce que** chaque créneau (45) s'étend en saillie hors d'une base de l'intercalaire (43) reliée au rebord (49).

10. Dispositif de gestion thermique (2) selon l'une des revendications précédentes, **caractérisé en ce que** l'empilement comporte en outre un rebord i (49) recouvrant la tranche des matériaux à changement de phase composite (37) opposée à celle en vis-à-vis de l'échangeur thermique (3).

11. Boucle de climatisation (1) **caractérisée en ce qu'**elle comporte un dispositif de gestion thermique (2) selon l'une des revendications précédentes.

## Patentansprüche

1. Vorrichtung zur thermischen Steuerung (2), umfassend:
- einen Wärmetauscher (3), in dem ein erstes Wärmeträgermedium fließt und der dazu bestimmt ist, von einem zweiten Wärmeträgermedium durchflossen zu werden,
- mindestens ein Wärmespeichermittel (35), umfassend einen Stapel aus:
• einer Vielzahl von Phasenwechsel-Verbundmaterialien (37) und
• Einlagen (43), die zwischen den Phasenwechsel-Verbundmaterialien (37) eingebracht sind und in thermischem Kontakt mit den Phasenwechsel-Verbundmaterialien (37) sind,
wobei der Stapel senkrecht zur Fließrichtung des Stroms des zweiten Wärmeträgermediums, stromab des Wärmetauschers, angeordnet ist, **dadurch gekennzeichnet, dass** das Wärmespeichermittel (35) mindestens einen Rand (49) umfasst, der mindestens eine Schmalseite mindestens eines der Phasenwechsel-Verbundmaterialien (37) bedeckt, wobei eine solche Schmalseite gegenüber dem Wärmetauscher (3) angeordnet ist.

2. Vorrichtung zur thermischen Steuerung (2) nach dem vorhergehenden Anspruch, **dadurch gekennzeichnet, dass** der Rand (49) einstückig mit mindestens einer der Einlagen (43) des Wärmespeichermittels (35) ist.

3. Vorrichtung zur thermischen Steuerung (2) nach Anspruch 2, **dadurch gekennzeichnet, dass** der die Schmalseite des Phasenwechsel-Verbundmaterials (37) bedeckende Rand (49) einstückig mit einer selben Einlage (43) ist.

4. Vorrichtung zur thermischen Steuerung (2) nach Anspruch 2, **dadurch gekennzeichnet, dass** die Schmalseite des Phasenwechsel-Verbundmaterials (37) von zwei zinnenartigen und komplementären Rändern (49) bedeckt ist, die gemäß einer wechselseitigen Schachtelung angeordnet sind, wobei die Ränder (49) einstückig mit verschiedenen Einlagen (43) sind, die beidseits des Phasenwechsel-Verbundmaterials (37) gelegen sind.

5. Vorrichtung zur thermischen Steuerung (2) nach einem der Ansprüche 2 bis 4, **dadurch gekennzeichnet, dass** die Einlagen (43) aus metallischem Material hergestellt sind und dass ihre Formgebung durch Tiefziehen erfolgt.

6. Vorrichtung zur thermischen Steuerung (2) nach einem der Ansprüche 2 bis 5, **dadurch gekennzeichnet, dass** jede Einlage (43) Zinnenreihen (45) umfasst, die parallel zum Rand (49) angeordnet sind, wobei die Reihen abwechselnd zueinander versetzt sind.

7. Vorrichtung zur thermischen Steuerung (2) nach dem vorhergehenden Anspruch, **dadurch gekennzeichnet, dass** das Wärmespeichermittel (35) Einlagen (43) umfasst, die paarweise einander gegenüber angeordnet sind, so dass die Zinnen der einen der Einlagen (43) sich direkt unter den Zinnen der anderen der Einlagen (43) erstrecken.

8. Vorrichtung zur thermischen Steuerung (2) nach Anspruch 6, **dadurch gekennzeichnet, dass** das Wärmespeichermittel (35) Einlagen (43) umfasst, die paarweise zueinander versetzt sind, so dass die Zinnen der einen der Einlagen (43) sich direkt unter ebenen Flächen der anderen der Einlagen (43) erstrecken.

9. Vorrichtung zur thermischen Steuerung (2) nach einem der Ansprüche 6 bis 8, **dadurch gekennzeichnet, dass** sich jede Zinne (45) aus einer mit dem Rand (49) verbundenen Grundseite der Zwischenlage (43) herausragend erstreckt.

10. Vorrichtung zur thermischen Steuerung (2) nach einem der vorhergehenden Ansprüche, **dadurch gekennzeichnet, dass** der Stapel ferner einen Rand (49) umfasst, der die Schmalseite der Phasenwechsel-Verbundmaterialien (37) bedeckt, die entgegengesetzt zu der gegenüber dem Wärmetauscher (3) liegenden ist.

11. Klimatisierungskreislauf (1), **dadurch gekennzeichnet, dass** er eine Vorrichtung zur thermischen Steuerung (2) nach einem der vorhergehenden Ansprüche umfasst.

## Claims

1. Thermal management device (2) comprising:
- a heat exchanger (3) within which there circulates a first heat-transfer fluid and which is intended to have a second heat-transfer fluid passing through it,
- at least one thermal storage means (35) comprising a stack between:
• a plurality of composite phase change materials (37), and
• inserts (43) interposed between the composite phase change materials (37) and in thermal contact with the said composite phase change materials (37),
the said stack being arranged at right angles to the direction in which the said flow of the second heat-transfer fluid flows, downstream of the heat exchanger, **characterized in that** the said thermal storage means (35) comprises at least one rim (49) that covers at least one edge face of at least one of the composite phase change materials (37), such an edge face being positioned facing the said heat exchanger (3).

2. Thermal management device (2) according to the preceding claim, **characterized in that** the rim (49) is formed as one with at least one of the inserts (43) of the said thermal storage means (35).

3. Thermal management device (2) according to Claim 2, **characterized in that** the rim (49) covering the edge face of composite phase change material (37) is formed as one with the same insert (43).

4. Thermal management device (2) according to Claim 2, **characterized in that** the edge face of composite phase change material (37) is covered by two crenelated and complementing rims (49) arranged so that they nest together, the said rims (49) being formed as one with distinct inserts (43) situated one on each side of the composite phase change material (37).

5. Thermal management device (2) according to one of Claims 2 to 4, **characterized in that** the inserts (43) are made of a metallic material and are shaped by pressing.

6. Thermal management device (2) according to one of Claims 2 to 5, **characterized in that** each insert (43) comprises rows of crenellations (45) distributed parallel to the rim (49), the rows being alternatively offset from one another.

7. Thermal management device (2) according to the preceding claim, **characterized in that** the thermal storage means (35) comprises inserts (43) arranged in pairs facing one another in such a way that the crenellations of one of the inserts (43) extend facing the crenellations of the other of the inserts (43).

8. Thermal management device (2) according to Claim 6, **characterized in that** the thermal storage means (35) comprises inserts (43) which are offset from one another in pairs in such a way that the crenellations of one of the inserts (43) face planar surfaces of the other of the inserts (43).

9. Thermal management device (2) according to one of Claims 6 to 8, **characterized in that** each crenellation (45) extends as a projection out from a base of the insert (43) connected to the rim (49).

10. Thermal management device (2) according to one of the preceding claims, **characterized in that** the stack further comprises a rim (49) covering the edge face of the composite phase change materials (37) that is the opposite edge face to the one facing the heat exchanger (3) .

11. Air-conditioning loop (1), **characterized in that** it comprises a thermal management device (2) according to one of the preceding claims.
